# EUROPÄISCHE PATENTANMELDUNG

(11) **EP 1 670 228 A2**
(43) Veröffentlichungstag der Anmeldung: **14.06.2006**
(21) Anmeldenummer: 05015723.9
(22) Anmeldetag: 20.07.2005
(51) Int. Cl.: H04M 7/00

(54) **Aufbau einer VoIP-Verbindung mittels des öffentlichen Fernsprechwählnetzes**

(30) Priorität: 09.12.2004 DE 102004059542; 26.03.2005 DE 102005013951
(71) Anmelder: Deutsche Telekom AG, 53113 Bonn (DE)
(72) Erfinder: Dihlmann, Klaus-Dieter, Dipl.-Ing., 64839 Münster-Altheim (DE); Meyer, Jens, 29339 Wathlingen (DE)

(57) **Zusammenfassung**

Die vorliegende Anmeldung betrifft ein Verfahren und eine Anwendung zum Aufbau einer VoIP-Verbindung über ein paketvermittelndes Netzwerk (LAN) zwischen einem Router eines ersten Endgerätes und einem Router eines zweiten Endgerätes, wobei beide Endgeräte an einem leitungsvermittelnden Kommunikationsnetz angeschlossen sind.

Gewöhnlich wird eine VoIP-Verbindung aufgebaut, indem vom ersten Endgerät aus zum zweiten Endgerät ein Sprachanruf getätigt wird, damit der dortige Benutzer manuell über den Router eine Internetverbindung herstellt. Diese herkömmliche Vorgehensweise erfordert einen entstprechenden Zeitverbrauch, bis die VoIP-Verbindung steht. Des Weiteren fallen entsprechende Telefonkosten an.

Gemäss der Anmeldung wird vom ersten Endgerät über das leitungsvermittelnde Telekommunikationsnetzwerk dem zweiten Endgerät eine Routeraktivierungsaufforderung per Datenanruf oder SMS gesendet, woraufhin der mit dem zweiten Endgerät in Verbindung stehende Router eine Einwahl in das paketvermittelnde Netzwerk LAN vornimmt. Danach wird von dem besagten Router über das zugeordnete zweite Endgerät via Telekommunikationsnetz zum ersten Endgerät für dessen Router eine für die VoIP-Verbindung vorgesehene IP-Adresse oder eine andere geeignete Kennung zum Aufbau der VoIPVerbindung gesendet, woraufhin die Verbindung der beiden Endgeräten über das Telekommunikationsnetzwerk getrennt werden kann, um über die beiden Router eine VoIP-Verbindung für die beiden Endgeräte bereitzustellen.

Der Vorteil der anmeldungsgemässen Lösung liegt insbesondere darin, das manueller Eingriff eines Gesprächspartners zur Aktivierung seines Routers nicht mehr erforderlich ist.

## Beschreibung

Die vorliegende Erfindung betrifft ein Verfahren und eine Anwendung zum Aufbau einer VoIP-Verbindung über ein paketvermittelndes Netzwerk (LAN) zwischen einem Router eines ersten Endgerätes und einem Router eines zweiten Endgerätes, wobei beide Endgeräte an einem leitungsvermittelnden Kommunikationsnetz angeschlossen sind.

Paketvermittelnde Netze (LAN = Local Area Network) treten in verstärktem Maße an die Stelle leitungsvermittelnder Telekommunikationsnetze, wie analoge Telefonnetze oder ISDN. Paketvermittelnde Netze, bei denen auch der Austausch akustischer Informationen in Form von Daten mittels des Internetprotokolls (IP) möglich ist, werden in der Literatur auch als VoIP-Netze (VoIP = Voice-over-IP) bezeichnet. Während in der leitungsvermittelnden Telefonie das Endgerät meistens Telefone sind, sind die Endgeräte von VoIP-Netzen sogenannte Endpunkte, weil neben den Sprachgeräten, also den Telefonen, auch andere Geräte eingesetzt werden können, beispielsweise PC's und dergleichen. Die Endpunkte in VoIP-Netzen tauschen im aktiven Betrieb miteinander Daten aus. Dabei wird zwischen Steuerungsdaten und Kommunikationsdaten unterschieden.

Während die Kommunikationsdaten im Falle der Sprachendgeräte aus dem digitalisierten Sprachsignal bestehen, werden die Steuerungsdaten benutzt, um Verbindungen zwischen Endpunkten zu initiieren und zu steuern. Die Leistungsmerkmale, die auch bereits aus der leitungsvermittelnden Telefonie bekannt sind, wie beispielsweise Wählen, Rückfragen, Markeln und dergleichen, werden in VoIP-Netzen mit Hilfe der Steuerungsdaten realisiert.

Bei der herkömmlichen leitungsvermittelnden Telefonie sind die Endgeräte nicht direkt miteinander verbunden, sondern an einer zentralen Vermittlungsinstanz, also an einer Kommunikationsanlage, angeschlossen. Die von den Endgeräten versendeten Steuerungsdaten werden von der Kommunikationsanlage ausgewertet und die Kommunikationsdaten, also die digitalisierten Sprachinformationen, werden von der Kommunikationsanlage zum jeweiligen Endgerät geleitet.

Bei den VoIP-Netzen werden die Kommunikationsdaten auf den direkten Weg zwischen den Endpunkten ausgetauscht, während die Steuerungsdaten in den meisten Fällen über eine zentrale Instanz ausgewertet und weitergeleitet werden. Diese zentrale Instanz ist in diesen Netzen beispielsweise ein sogenannter Gatekeeper der unter anderem die Umsetzung zwischen Rufnummern und Netzwerkadressen vornimmt und so den Verbindungsaufbau zwischen zwei Endpunkten steuert.

Am Endpunkt bildet ein sogenannter Router die Schnittstelle zwischen dem eigentlichen Endgerät und dem paketvermittelnden Netz. Voraussetzung für den Austausch von Kommunikationsdaten ist, dass die Endgeräte über die jeweils zugeordneten Router mit dem paketvermittelnden Netz, vorzugsweise dem Internet, verbunden sind und aus dem (im weiteren exemplarisch genannten) Internet eine gültige IP-Adresse erhalten haben. Ist das der Fall, kann ein ständiger Austausch von Kommunikationsdaten stattfinden; bei der dynamischen IP-Adressvergabe erfolgt im Gegensatz zur statisch vergebenen IP-Adresse nach 24 Stunden gewöhnlich eine Verbindungstrennung durch den Internet-Serviceprovider.

Aus der DE 102 45 547 B3 geht ein gattungsgemäßes Verfahren sowie eine Anordnung zum Aufbau einer VoIP-Verbindung über ein paketvermittelndes Netz, hier Intranet, Extranet und Internet, hervor. Hierzu wird ein erstes Endgerät über das Internet zunächst mit einem E-Proxi eines zugeordneten Extranets verbunden, danach wird die Verbindung zwischen dem E-Proxi und einem I-Proxi des Intranets und anschließend die Verbindung zum zweiten Endgerät aufgebaut. Durch diese Anordnung können Firewalls eingespart werden und dennoch eine zuverlässige und sichere Telefonverbindung hergestellt werden.

Voraussetzung zum Aufbau der VoIP-Verbindung ist nach dem allgemein bekannten Stand der Technik, dass beide Endgeräte, welche VoIP unterstützen, mit dem Internet verbunden sind und je über eine IP-Adresse verfügen, welche beiden Partnern bekannt sein muss. In diesem Zusammenhang kann das Problem auftreten, dass einer der beteiligten Router nicht mit dem Internet verbunden und somit nicht erreichbar ist. Gewöhnlich erfordert dieser Fall einen herkömmlichen Sprachanruf vom ersten Endgerät aus zum zweiten Endgerät, damit der dortige Benutzer manuell über den Router eine Internetverbindung herstellt. Diese herkömmliche Vorgehensweise erfordert einen entsprechenden Zeitverbrauch, bis die VoIP-Verbindung steht. Des Weiteren fallen entsprechende Telefonkosten an.

Es ist daher die Aufgabe der vorliegenden Erfindung ein Verfahren sowie eine Anordnung zum Aufbau einer VoIP-Verbindung zu schaffen, welches bzw. welche eine einfache und schnelle Aktivierung eines Routers bei einem entfernten Gesprächspartner ermöglicht, falls der dortige Router nicht mit dem paketvermittelnden Netz in Verbindung steht.

Die Aufgabe wird ausgehend von einem Verfahren gemäß dem Oberbegriff von Anspruch 1 in Verbindung mit dessen kennzeichnenden Merkmalen gelöst. Im Hinblick auf eine korrespondierende Anordnung wird die Erfindung durch Anspruch 7 gelöst. Die jeweils rückbezogenen abhängigen Ansprüche geben vorteilhafte Weiterbildungen der Erfindung wieder.

Die Erfindung schließt die verfahrenstechnische Lehre ein, dass der Aufbau einer VoIP-Verbindung entsprechend folgender Verfahrensschritte durchgeführt wird:

Als erstes wird vom ersten Endgerät über das leitungsvermittelnde Telekommunikationsnetzwerk dem zweiten Endgerät eine Routeraktivierungsaufforderung per Datenanruf oder SMS gesendet, woraufhin der mit dem zweiten Endgerät in Verbindung stehende Router eine Einwahl in das paketvermittelnde Netzwerk LAN vornimmt. Danach wird von dem besagten Router über das zugeordnete zweite Endgerät via Telekommunikationsnetz zum ersten Endgerät für dessen Router eine für die VoIP-Verbindung vorgesehene IP-Adresse oder eine andere geeignete Kennung zum Aufbau der VoIP-Verbindung gesendet, woraufhin die Verbindung der beiden Endgeräte über das Telekommunikationsnetzwerk getrennt werden kann, um über die beiden Router eine VoIP-Verbindung für die beiden Endgeräte bereitzustellen.

Der Vorteil der erfindungsgemäßen Lösung liegt insbesondere darin, das ein manueller Eingriff eines Gesprächspartners zur Aktivierung seines Routers nicht mehr erforderlich ist. Die erfindungsgemäße Lösung funktioniert vollständig automatisch und vereinfacht somit den VoIP-Verbindungsaufbau, welcher gegenüber der besagten manuellen Variante weitaus schneller von statten geht. Zur Umsetzung der erfindungsgemäßen Lösung ist die Software für das Endgerät sowie die Ausgestaltung seiner Bedieneroberfläche entsprechend zu ändern. Optional kann dem angerufenen Gesprächspartner eingeräumt werden, die Routeraktivierungsaufforderung zu quittieren, bevor die VoIP-Verbindung eingerichtet wird.

Gemäß einer weiteren, die Erfindung im Hinblick auf die Einhaltung gewisser Sicherheitskriterien verbessernden Maßnahme wird vorgeschlagen, das zur Sicherung gegen unbefugte VoIP-Verbindungsaufbauversuche durch den Router des zweiten Endgeräts die übermittelte Rufnummer bzw. SMS-Kennung des ersten Endgeräts mit hinterlegten erlaubten Rufnummern bzw. SMS-Kennungen verglichen wird, so dass nur durch erlaubte Rufnummern bzw. SMS-Kennungen eine Aktivierung des Routers des zweiten Endgerätes herbeiführbar ist. Diese Maßnahme dient der Einschränkung des Benutzerkreises, der den Router dazu bewegen kann, eine Internetverbindung aufzubauen. Hierfür ist es erforderlich, im Konfigurator des Routers entsprechende Listen mit definierten Freigabeparametern - beispielsweise Benutzername, Rufnummer des Anrufers, Passwörter, Subadresse und dergleichen - der zugelassenen Gesprächspartner einzurichten.

Alternativ oder zusätzlich zu der vorstehend beschriebenen Maßnahme kann als eine weitere Sicherung gegen unbefugte VoIP-Verbindungsaufbauversuche der Datenanruf oder die SMS des ersten Endgeräts zusätzlich mit einer Subadresse versehen werden, welche mit einer definierten Subadresse des Routers des zweiten Endgeräts verglichen wird, so dass nur durch erlaubte Subadressen innerhalb des eingehenden Datenanrufes eine Aktivierung des Routers des zweiten Endgerätes herbeiführbar ist. Zur Umsetzung dieser Maßnahme ist im Router lediglich die zugeordnete Subadresse zu Vergleichszwecken zu hinterlegen. Auf die Abspeicherung einer Liste erlaubter Rufnummern bzw. SMS-Kennungen kann in soweit verzichtet werden.

Besonders eignet sich zur Umsetzung der vorliegenden Erfindung ein nach dem ISDN-Standard funktionierendes Telekommunikationsnetz, da hiermit beispielsweise die Sicherung mittels Subadresse mit dem - an sich bekannten - Verfahren einer Subadressierung über den ISDN-D-Kanal vorgenommen werden kann. Im D-Kanal der ISDN-Leitung wird der Anruf, den gegebenen ISDN-Vorschriften entsprechend, als "unresticted digital information" kodiert. Weiterhin ermöglicht ein nach dem ISDN-Standard funktionierendes Telekommunikationsnetz die Übermittlung der für die VoIP-Verbindung vorgesehenen IP-Adressen oder Kennung über den B-Kanal der ISDN-Verbindung.

Daneben ist es auch möglich, ein analoges Netz oder ein Mobilfunktnetz als Telekommunikationsnetz der hier interessierenden Art zu nutzen, wobei die per Datenanruf vom ersten Endgerät erfolgende Routeraktivierungaufforderung an das zweite Endgerät in der Regel modemgesteuert durchzuführen ist.

Zur gerätetechnischen Umsetzung des vorstehend beschriebenen Verfahren zum Aufbau einer VoIP-Verbindung kann der Router direkt im zugeordneten Endgerät oder in einer TK-Anlage integriert sein. Im erstgenannten Fall ist damit der Vorteil verbunden, dass ein einziges kompaktes Gerät zur Verfügung gestellt wird. Im letztgenannten Fall gibt die TK-Anlage die Möglichkeit, mehrere einfach aufgebaute Endgeräte anzuschließen, welche gemeinsam auf einen einzigen Router zurückgreifen können. Dies reduziert den gerätetechnischen Aufwand. Natürlich ist es auch möglich, das Endgerät und den Router als separate Geräte auszuführen.

Das Endgerät kann im Rahmen der vorliegenden Erfindung nach Art eines Festnetztelefons, eines Mobilfunktelefons, eines IP-PC-Telefons oder eines normalen PC's mit CAPI-Schnittstelle oder zumindest Modem ausgebildet sein.

Ist der Router, welcher auf diese Weise aus der Ferne aktiviert werden soll, an einem analogen Telekommunikationsnetz angeschlossen, können nicht alle Arten von Routeraktivierungsaufforderungen, welche im digitalen Telekommunikationsnetz nutzbar sind, zum Einsatz kommen. Wird beispielsweise eine SMS als Routeraktivierungsaufforderung genutzt, kann der Betreiber diesen Dienst an einem analogen Anschluss nicht mehr anderweitig nutzen. Ist der Betreiber allerdings damit einverstanden, kann dieses Verfahren auch hier angewendet werden.

Die Erfindung schließt die technische Lehre ein, dass unter Zugrundelegung eines analogen Telekommunikationsnetzes und einer zumindest dem zweiten Endgerät zugeordneten TK-Anlage zur Übermittlung der Routeraktivierungsaufforderung an das zweite Endgerät eine an der TK-Anlage angeschlossene Anrufbeantwortereinheit eingebunden ist, an welche nach Aktivierung der Fernabfrage eine Sonder-PIN oder ähnliches an das erste Endgerät als Routeraktivierungsaufforderung übermittelt.

Alternativ dazu kann die Aufgabe auch dadurch gelöst werden, dass unter Zugrundelegung eines analogen Telekommunikationsnetzes und einer zumindest dem zweiten Endgerät zugeordneten TK-Anlage zur Übermittlung der Routeraktivierungsaufforderung an das zweite Endgerät eine an der TK-Anlage angeschlossene Faxweiche eingebunden ist, welche nach einer CNG-Negativ-Prüfung eine Tasteneingabeaufforderung als Routeraktivierungsaufforderung an das erste Endgerät übermittelt.

Vorteilhafter Weise kann das an einem analogen Anschluss angebundene zweite Endgerät mittels irgendeines Telefons angerufen werden. Der in der TK-Anlage des angerufenen Endgeräts integrierte Anrufbeantworter meldet sich, woraufhin der Anrufer die Fernabfrage - meistens per *-Taste - einleitet und nun nicht die Fernabfrage - PIN des Anrufbeantworters eingibt, sondern eine für die TK-Anlage definierte Sonder-PIN. Hierdurch erhält der mit dem zweiten Endgerät in Verbindung stehende Router den Anstoß zum Aufbau der Internet-Verbindung. Ansonsten erfolgt der Verbindungsaufbau entsprechend der Beschreibung in der zugehörigen Hauptanmeldung.

Sofern dem Nutzer des ersten Endgeräts der Name bekannt ist, welchen der Hersteller oder Betreiber der TK-Anlage bei einem Dynamic-DNS-Service-Provider registriert hat, kann der Anrufer den Router auch mit diesem Namen über das Internet erreichen. Hierbei ist zu beachten, dass der angerufene Router in der Lage sein muss, seine aktuelle IP-Adresse bei dem Dynamic-DNS-Service-Provider zu hinterlegen.

Gemäß der alternativen Lösung der bei welcher die Funktionalität einer Faxweiche zwecks Entgegennahme einer Routeraktivierungsaufforderung erweitert wird, bildet die CNG-Negativ-Prüfung den Ansatzpunkt.

Anrufe oder Faxsendungen werden von der hier interessierenden Faxweiche automatisch angenommen, welche auf der nun stehenden Verbindung nach dem an sich bekannten CNG-Signal sucht, das ein in der Absicht ein Fax zu senden anrufendes Faxgerät ausgeben würde. Liegt ein CNG-Signal an, schaltet die Faxweiche auf das an einem entsprechenden Anschluss der TK-Anlage angeschlossenes Faxgerät um, so dass die Faxsendung entgegengenommen werden kann. Liegt dagegen ein CNG-Signal nicht an, signalisiert die Faxweiche einen (Sprach-)Anruf an zumindest ein angeschlossenes Telefon. Bis eines dieser Endgeräte den Anruf annimmt, hört der Anrufer gewöhnlich einen von der Faxweiche erzeugten Rufton oder eine "Bitte Warten!"-Ansage.

Genau diese Funktion macht sich die erfindungsgemäße Lösung zu Nutze, in dem im Falle eines ankommenden Anrufes die Faxweiche den Anruf annimmt und nach einer CNG-Negativ-Prüfung nicht einfach eine Warteinformation ausgibt, sondern den Anrufer auffordert, über sein Endgerät eine Tasteneingabe zu tätigen, falls der Anrufer den Router des angerufenen Anschlusses ansprechen möchte. Zusätzlich kann vorgesehen werden, dass der Anrufer nach Betätigung dieser Tastenfolge aus Sicherheitsgründen aufgefordert wird eine PIN einzugeben. Wurde die richtige PIN eingegeben, baut der Router des angerufenen Anschlusses die gewünschte Internetverbindung auf, so dass eine VoIP-Verbindung hergestellt werden kann.

Sofern dem Anrufer der Name bekannt ist, den der Hersteller oder Betreiber der Faxweiche bei einem Dynamic-CNS-Service-Provider registriert hat, kann der Anrufer den Router mit diesem Namen auch über das Internet erreichen. Hierbei ist zu beachten, dass der angerufene Router in der Lage sein muss, seine aktuelle IP-Adresse bei einem Dynamic-CNS-Service-Provider zu hinterlegen.

Vorzugsweise kann bei der erfindungsgemäßen Lösung auch die Konfiguration vorgesehen werden, dass der Betreiber die vorstehend beschriebene Funktion aktivieren oder deaktivieren kann. Optional kann im Falle einer Routeraktivierungsaufforderung von Extern ein Ruf an einen in der Konfiguration vorgesehenen Anschluss angelegt werden, an dem der Betreiber den Ruf annehmen muss, um mit einem Sonderton oder einer Ansage darauf hingewiesen zu werden, dass sein Router von außen her angestoßen werden soll und die aufzubauende VoIP-Verbindung über eine Tastenkombination bestätigen, bevor die Internetverbindung zustande kommt. Durch diese zusätzliche Maßnahme kann zum Beispiel verhindert werden, dass eine VoIP-Verbindung zustande kommt, wenn der Nutzer nicht zugegen ist und möglicherweise dadurch keine Kommunikationspartner zur Verfügung stehen, die es sinnvoll erscheinen lassen, die VoIP-Verbindung für die Zwecke des Anrufers aufzubauen.

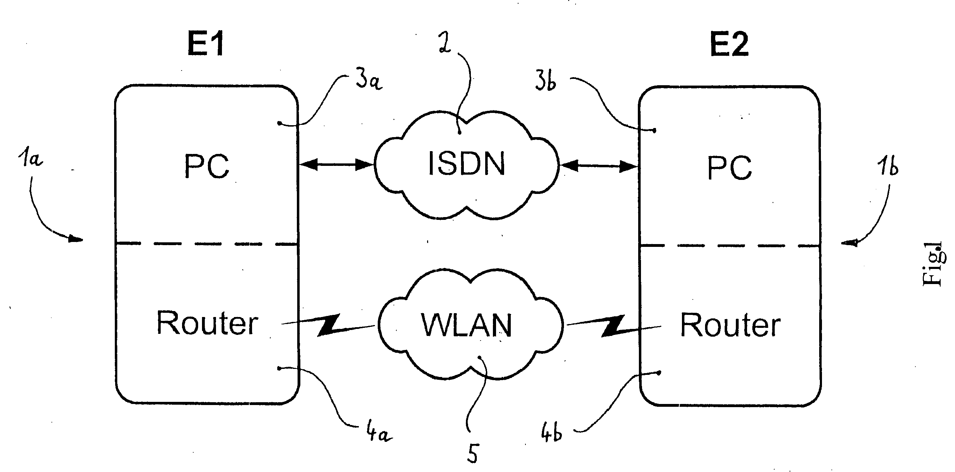

Weitere die Erfindung verbessernde Maßnahmen sind in den abhängigen Ansprüchen angegeben oder werden nachfolgend gemeinsam mit der Beschreibung von bevorzugten Ausführungsbeispielen der Erfindung näher dargestellt. Die Figur 1 zeigt anhand eines schematischen Blockschaltbildes eine Anordnung zum Aufbau einer VoIP-Verbindung via Internet mittels Datenanruf über ein nach dem ISDN-Standard funktionierendes leitungsvermittelndes Telekommunikationsnetz.

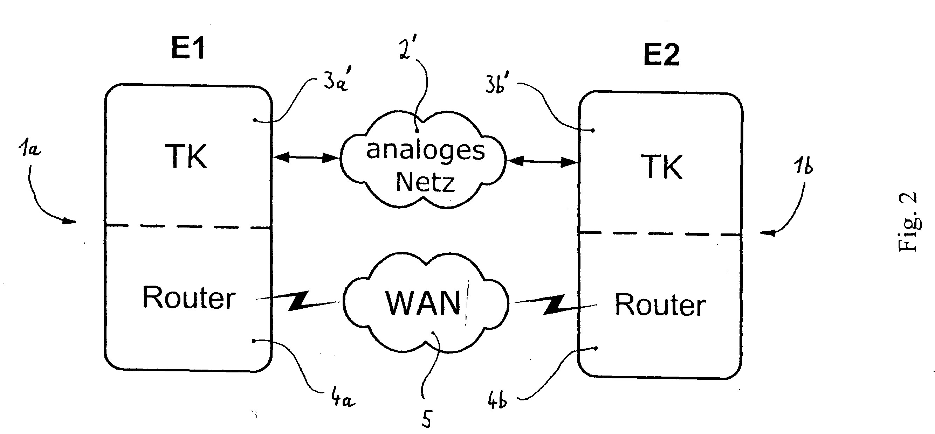

Die Figur 2 zeigt anhand eines anderen Blockschaltbildes eine Variante für einen Verbindungsaufbau über ein analoges Netz.

Gemäß Figur 1 ist ein erstes Endgerät 1a mit einem zweiten Endgerät 1b an ein nach ISDN-Standard ausgebildetes leistungsvermittelndes Telekommunikationsnetz 2 angeschlossen. Beide Endgeräte 1a und 1b bestehen jeweils aus einem PC 3a bzw. 3b mit je integrierter ISDN-Karte, worüber der Anschluss an das Telekommunikationsnetz 2 erfolgt. Des Weiteren besitzt jedes Endgerät 1a und 1b ein integrierten Router 4a bzw. 4b, um eine VoIP-Verbindung zwischen beiden Endgeräten 1a und 1b auch über ein paralleles, paketvermittelndes Netz LAN 5 (Internet) herstellen zu können.

Von dem ersten Endgerät 1a wird nun über das Telekommunikationsnetz 2 an das zweite Endgerät 1b eine Routeraktivierungsaufforderung per Datenanruf gesendet. Hierfür wird im D-Kanal der ISDN-Leitung der Datenanruf, den gegebenen ISDN-Vorschriften entsprechend, als "unrestricted digital information" kodiert. Der Router 4b des zweiten Endgeräts 1b erkennt den Datenanruf und vergleicht die anrufende Rufnummer mit in einer hierin hinterlegten Liste enthaltenen erlaubten Rufnummern. Der Router 4b nimmt den Datenanruf an, baut über das paketvermittelnde Netz LAN 5 eine Internetverbindung auf und sendet anschließend über den B-Kanal des nach ISDN-Standard funktionierenden Telekommunikationsnetzes 2 eine IP-Adresse und gegebenenfalls zusätzliche zwischen den Gesprächspartnern verabredete Parametern an das erste Endgerät 1a zurück. Das angerufene, zweite Endgerät 1b baut die Verbindung nach dem Senden dieser Zugangsparameter an das anrufende Endgerät 1a wieder ab.

Das anrufende, erste Endgerät 1a hat nun die Möglichkeit, den Router 4b des zweiten Endgerätes 1b über das paketvermittelnde Netz LAN 5 zu erreichen und, sofern die Sicherheitseinstellungen des Netzwerkes dies zulassen, Kommunikationsdaten mit einem dahinterliegenden - nicht weiter dargestellten - Netzwerk auszustauschen.

Alternativ zur Übermittlung der IP-Adresse könnte auch, je nach Einstellung im angerufenen Router 4b, eine Kennung - beispielsweise in Form eines Namens - an das anrufende Endgerät 1a rückübermittelt werden. Eine solche Kennung müsste der angerufene Gesprächspartner zuvor bei einem sogenannten Dynamic-DNS-Service-Provider registriert haben. Hierbei ist zu beachten, dass der angerufene Router 4b seine aktuelle IP-Adresse bei dem Dynamic-DNS-Service-Provider hinterlegt hat.

Das vorstehend beschriebene Ausführungsbeispiel zur Umsetzung der vorliegenden Erfindung kann auch so abgewandelt werden, dass ISDN-Verbindungsgebühren zum Anstoß des Routers 4b eingespart werden. Der beschriebene Datenanruf wird, sofern die übermittelten Parameter im D-Kanal des nach ISDN-Standard funktionierenden Telekommunikationsnetzes 2 stimmen, vom Router 4b mit einem "disconnect-user-busy" beantwortet werden, wonach der Router 4b die Internetverbindung auslöst. Sofern dem anrufenden Endgerät 1a die Kennung bekannt ist, welche dem angerufenen Endgerät 1b bei dem Dynamic-DNS-Service-Provider zukommt, kann das anrufende Endgerät 1a den Router 4b mit diesem Namen über das paketvermittelnde Netz LAN 5 erreichen. Hierbei ist zu beachten, dass der angerufene Router 4b in Lage sein muss, seine aktuelle IP-Adresse bei dem Dynamic-DNS-Service-Provider zu hinterlegen. Stimmen die gesendeten Parameter im D-Kanal nicht, beantwortet der Router 4b den Datenanruf nicht und baut auch keine VoIP-Verbindung auf.

Alternativ zu dem vorstehend beschriebenen Ausführungsbeispiel kann der Datenanruf auch mit Hilfe eines sogenannten Subadressing erfolgen. Sollte dementsprechend der Datenanruf nicht von bestimmten, im angerufenen Router 4b festgelegten Rufnummern erfolgen, sondern diesbezüglich flexibel sein, kann das Subadressing im D-Kanal als Sicherheitsoption herangezogen werden. (Dieses Verfahren wird bereits von der Anmelderin zur Authentifizierung eines berechtigten PC's bei der Fernkonfiguration von TK-Anlagen verwendet.) Hierbei wird der abgehende Datenanruf des anrufenden Endgeräts 1a zusätzlich zu dem vorstehend beschriebenen Datenanruf im Setup um einen zusätzlichen Parameter in Form der Subadresse ergänzt. In dem Router 4b des zweiten Endgeräts 1b wird als Sicherheitskriterium keine Liste von erlaubten Rufnummern abgelegt, sondern lediglich die Subadresse definiert, die von dem den Datenanruf erzeugenden Endgerät 1a gesendet werden muss. Der Router 4b nimmt den Datenanruf mit korrekter Subadresse an und baut anschließend die Internetverbindung über das paketvermittelnde Netz LAN 5 auf und sendet über den B-Kanal des nach dem ISDN-Standard funktionierenden Telekommunikationsnetzes 2 des anrufenden Endgeräts 1a die IP-Adresse und ggf. zusätzliche zwischen den Usern verabredeten Parameter, welche beim anrufenden Endgerät 1a zur Anzeige gebracht werden können.

Möchte der Benutzer des Endgeräts 1b die Anrufer, die seinen Router 4b anstoßen könnten eine VoIP-Verbindung über das paketvermittelnde Netz LAN 5 aufzubauen, noch weiter einschränken und darauf verzichten, das der Anrufer nicht von irgendeinem Anschluss aus anruft, sondern seinen Anruf von einem ganz bestimmten Anschluss aus startet, so kann das vorstehend erläuterte Subadressing auch als Zusatzkriterium herangezogen werden. Hierbei muss das anrufende Endgerät 1a nicht nur wie beim eingangs beschriebenen Ausführungsbeispiel eine bestimmte Rufnummer übermitteln, sondern zusätzlich auch noch eine im angerufenen Router 4b definierte Subadresse.

Ansonsten entspricht dieses Ausführungsbeispiel dem eingangs detailliert beschriebenen Ausführungsbeispiel in Aufbau und Funktion, so dass hier nicht weiter darauf eingegangen werden braucht.

Gemäße eines dritten Ausführungsbeispiels ist es auch möglich, die Routeraktivierungsaufforderung zum Router 4b des zweiten Endgeräts 1b per SMS im Festnetz (oder im Mobilfunknetz) zu senden. Zu diesem Zwecke kann als geeignete SMS der Ausdruck "User'test'Passwort'test'" verwendet werden. Der Router 4b des zweiten Endgerätes 1b vergleicht diese gesendeten Daten mit einem seiner möglichen abgespeicherten Einträge und baut die Verbindung über das paketvermittelnde Netz LAN 5 ggf. auf. Sofern dem die SMS sendenden Endgerät 1a die Kennung bekannt ist, den der SMS-Empfänger bei einem Dynamic-DNS-Service-Provider registriert hat, kann das SMS-sendende Endgerät 1a den Router 4b mit diesem Namen über das paketvermittelnde Netz LAN 5 erreichen. Als weitere Abwandlung ist es auch möglich, den vorstehend exemplarisch angegebenen Ausdruck für eine SMS mit einer Subadresse zu ergänzen. Somit hat der angerufene Router 4b nicht allein den Benutzernamen sowie das zugeordnete Passwort zu vergleichen; als zusätzliches Sicherheitskriterium ist ebenfalls die Übereinstimmung hinsichtlich der Subadressen zu ermitteln.

Entsprechend eines vierten Ausführungsbeispiels der Erfindung kann das erstgenannte Ausführungsbeispiel auch dahingehend modifiziert werden, dass der Datenanruf bei einem analogen Netz als leitungsvermittelndes Telekommunikationsnetz 2 mittels Modem erfolgt. Beispielsweise kann von einem PC mit angeschlossenem analogen Modem aus über entsprechende Software eine analoge Verbindung mit dem anderen Anschluss aufgebaut werden, an dem der andere Router angeschlossen ist. Ansonsten stimmt dieses Ausführungsbeispiel mit dem vorstehend beschriebenen Ausführungsbeispielen überein.
Nach Fig.2 sind das erste Endgerät 1a und das zweite Endgerät 1b hier Bestandteil einer TK-Anlage 3a' bzw. 3b'. Beide Endgeräte 1a und 1b stehen über ein analoges Netz 2' in Verbindung. Der Aufbau der VoIP-Verbindung erfolgt in vorstehend beschriebener Weise.

Die vorliegende Erfindung ist nicht beschränkt auf die vorstehend beschriebenen bevorzugten Ausführungsbeispiele. Es sind vielmehr auch weitere Abwandlungen hiervon denkbar, welche vom Schutzbereich der nachfolgenden Ansprüche erfasst sind. So ist das erfindungsgemäße Verfahren beispielsweise auch über ein Mobilfunknetz als leitungsverbindendes Telekommunikationsnetz umsetzbar. Neben dem Internet als paketvermittelndes Netz (LAN) können auch andere artgleiche Netze, wie beispielsweise ein Intranet benutzt werden. Auch die Gestaltung eines die erfindungsgemäße Lösung umsetzende Endgeräts sowie dessen Software kann abgewandelt werden. So ist es beispielsweise auch möglich, Endgeräte zum Einsatz zu bringen, welche Bestandteile einer TK-Anlage sind, die wiederum einen gemeinsamen Router zum Aufbau der VoIP-Verbindung enthält.

Abschließend sei darauf hingewiesen, dass die in den Ausführungsbeispielen konkret beschriebenen Funktionen von Endgerät 1a und Endgerät 1b auch wechselseitig austauschbar sind, so dass auch das Endgerät 1b als anrufendes Endgerät und das Endgerät 1a das angerufenes Endgerät fungieren kann.

### Bezugszeichenliste

- 1a: erstes Endgerät
- 1b: zweites Endgerät
- 2: leitungsvermittelndes Telekommunikationsnetz (ISDN)
- 2: Analoges Telekommunikationsnetz
- 3a: erster PC
- 3b: zweiter PC
- 4a: erster Router
- 4b: zweiter Router
- 5: paketvermittelndes Netz (LAN)

## Patentansprüche

1. Verfahren zum Aufbau einer VoIP-Verbindung über ein paketvermittelndes Netz LAN (5) zwischen einem Router (4a) eines ersten Endgerätes (1a) und einem Router (4b) eines zweiten Endgerätes (1b), wobei beide Endgeräte (1a, 1b) an einem leitungsvermittelnden Telekommunikationsnetz (2) angeschlossen sind,
**gekennzeichnet durch** die folgenden Verfahrensschritte:
- vom ersten Endgerät (1a) wird über das Telekommunikationsnetzwerk (2) dem zweiten Endgerät (1b) eine Routeraktivierungsaufforderung per Datenanruf oder SMS gesendet,
- von dem mit dem zweiten Endgerät (1b) in Verbindung stehenden Router (4b) wird eine Einwahl in das paketvermittelnde Netzwerk LAN (5) vorgenommen,
- von dem Router (4b) wird über das zugeordnete zweite Endgerät (1b) via Telekommunikationsnetz (2) zum ersten Endgerät (1a) für dessen Router (4a) eine für die VoIP-Verbindung vorgesehene IP-Adresse und/oder Kennung zum Aufbau der VoIP-Verbindung gesendet,
- die Verbindung der beiden Endgeräte (1a, 1b) über das Telekommunikationsnetzwerk (2) wird getrennt, und
- über die beiden Router (4a, 4b) wird die VoIP-Verbindung für die beiden Endgeräte (1a, 1b) bereitgestellt.

2. Verfahren nach Anspruch 1,
**dadurch gekennzeichnet, dass** zur Sicherung gegen unbefugte VoIP-Verbindungsaufbauversuche durch den Router (4b) des zweiten Endgeräts (1b) die übermittelte Rufnummer bzw. SMS-Kennung des ersten Endgeräts (1a) mit hinterlegten erlaubten Rufnummern bzw. SMS-Kennungen verglichen wird, so dass nur durch erlaubte Rufnummern bzw. SMS-Kennung eine Aktivierung des Routers (4b) des zweiten Endgerätes (1b) herbeiführbar ist.

3. Verfahren nach Anspruch 1 oder 2,
**dadurch gekennzeichnet, dass** zur Sicherung gegen unbefugte VoIP-Verbindungsaufbauversuche der Datenanruf oder die SMS des ersten Endgeräts (1a) zusätzlich eine Subadresse enthält, welche mit einer definierten Subadresse des Routers (4b) des zweiten Endgeräts (1b) verglichen wird, so dass nur durch erlaubte Subadressen eine Aktivierung des Routers (4b) des zweiten Endgerätes (4b) herbeiführbar ist.

4. Verfahren nach Anspruch 3,
**dadurch gekennzeichnet, dass** das Telekommunikationsnetz (2) ein ISDN ist, und dass bei der Sicherung mittels Subadresse das Verfahren eines Subadressing über den ISDN-D-Kanal verwendet wird.

5. Verfahren nach Anspruch 1,
**dadurch gekennzeichnet, dass** das Telekommunikationsnetz (2) ein ISDN ist, und dass die für die VoIP-Verbindung vorgesehene IP-Adresse oder Kennung über den B-Kanal der ISDN-Verbindung gesendet wird.

6. Verfahren nach einem der Ansprüche 1 bis 3,
**dadurch gekennzeichnet, dass** das Telekommunikationsnetz (2) ein analoges Netz oder ein Mobilfunknetz ist, wobei die per Datenanruf vom ersten Endgerät (1a) erfolgende Routeraktivierungsaufforderung an das zweite Endgerät (1b) modemgesteuert durchgeführt wird.

7. Anordnung zum Aufbau einer VoIP-Verbindung über ein paketvermittelndes Netz LAN (5) zwischen einem Router (4a) eines ersten Endgerätes (1a) und einem Router (4b) eines zweiten Endgerätes (1b), wobei beide Endgeräte (1a, 1b) an einem leitungsvermittelnden Telekommunikationsnetz (2) angeschlossen sind,
**dadurch gekennzeichnet, dass** das erste Endgerät (1a) über das Telekommunikationsnetz (2) dem zweiten Endgerät (1b) eine Routeraktivierungsaufforderung per Datenanruf oder SMS sendet, dessen zugeordneter Router (4b) eine Einwahl in das paketvermittelnde Netz LAN (5) vornimmt und über das zugeordnete zweite Endgerät (1b) via Telekommunikationsnetz (2) zum ersten Endgerät (1a) für dessen Router (4a) eine für die VoIP-Verbindung vorgesehene IP-Adresse und/oder Kennung zum Aufbau der VoIP-Verbindung sendet, um anstelle der Verbindung der beiden Endgeräte (1a, 1b) über das Telekommunikationsnetz (2) die VoIP-Verbindung für die beiden Endgeräte (1a, 1b) bereitzustellen.

8. Anordnung nach Anspruch 7,
**dadurch gekennzeichnet, dass** der Router (4a; 4b) direkt im zugeordneten Endgerät (1a; 1b) oder in einer TK-Anlage integriert ist, an welche mehrere Endgeräte angeschlossen sind.

9. Anordnung nach Anspruch 7,
**dadurch gekennzeichnet, dass** das Endgerät (1a; 1b) nach Art eines Festnetztelefons, eines Mobiltelefons, eines IP-PC-Telefons oder eines PC's mit CAPI-Schnittstelle oder Modem ausgebildet ist.

10. Anordnung nach Anspruch 7,
**dadurch gekennzeichnet, dass** das Telekommunikationsnetz (2) als ISDN, als analoges Netz oder als Mobilfunknetz ausgebildet ist.

11. Anordnung nach einem der vorstehenden Ansprüche,
**dadurch gekennzeichnet, dass** das paketvermittelnde Netz LAN (5) das Internet ist.

12. Verfahren nach Anspruch 1,
**dadurch gekennzeichnet, dass** zum Einsatz in einem analogen Telekommunikationsnetz (2') und einer zumindest dem zweiten Endgerät (1b) zugeordneten TK-Anklage (3b') der folgende Verfahrenszwischenschritt ausgeführt wird:
- zur Übermittlung der Routeraktivierungsaufforderung an das zweite Endgerät (1b) wird eine an der TK-Anlage (3b') angeschlossene Anrufbeantwortereinheit eingebunden, an welche nach Aktivierung der Fernabfrage eine Sonder-PIN als Routeraktivierungsaufforderung übermittelt wird.

13. Verfahren nach Anspruch 1,
**dadurch gekennzeichnet, dass** zum Einsatz in einem analogen Telekommunikationsnetz (2') und einer zumindest dem zweiten Endgerät (1b) zugeordneten TK-Anklage (3b') der folgende Verfahrenszwischenschritt ausgeführt wird:
- zur Übermittlung der Routeraktivierungsaufforderung an das zweite Endgerät (1b) wird eine an der TK-Anlage (3b') angeschlossene Faxweiche eingebunden, durch welche nach einer CNG-Negativ-Prüfung eine Tasteneingabeaufforderung als Routeraktivierungsaufforderung übermittelt wird.

14. Anordnung nach Anspruch 7,
**dadurch gekennzeichnet, dass** unter Zugrundelegung eines analogen Telekommunikationsnetzes (2') und einer zumindest dem zweiten Endgerät (1b) zugeordneten TK-Anklage (3b') zur Übermittlung der Routeraktivierungsaufforderung an das zweite Endgerät (1b') eine an der TK-Anlage (3b') angeschlossene Anrufbeantwortereinheit eingebunden ist, an welche das erste Endgerät (1a') nach Aktivierung der Fernabfrage eine Sonder-PIN als Routeraktivierungsaufforderung übermittelt.

15. Anordnung nach Anspruch 7,
**dadurch gekennzeichnet, dass** unter Zugrundelegung eines analogen Telekommunikationsnetzes (2') und einer zumindest dem zweiten Endgerät (1b) zugeordneten TK-Anklage (3b') zur Übermittlung der Routeraktivierungsaufforderung an das zweite Endgerät (1b') eine an der TK-Anlage (3b') angeschlossene Faxweiche eingebunden ist, welche nach einer CNG-Negativ-Prüfung eine Tasteneingabeaufforderung als Routeraktivierungsaufforderung an das erste Endgerät (1a') übermittelt.
